# DEMANDE DE BREVET EUROPEEN

(11) **EP 4 786 420 A1**
(43) Date de publication de la demande: **05.08.2026**
(21) Numéro de dépôt: 26155596.5
(22) Date de dépôt: 30.01.2026
(51) Int. Cl.: C02F 1/467, C25B 1/26, C25B 15/02, E04H 4/14, C02F 103/42

(54) **ELECTROLYSEUR POUR PISCINE**

(30) Priorité: 03.02.2025 FR 2501086
(71) Demandeur: ACWA Groupe, 44310 Saint-Philbert-de-Grand-Lieu (FR)
(72) Inventeur: COTTREAU, Yann, 83330 LE BEAUSSET (FR); POIRIER, Ronan, 31320 PECHBUSQUE (FR)
(74) Mandataire: Jacobacci & Partners France

(57) **Abrégé**

La présente invention concerne un électrolyseur pour piscine, comprenant une cellule d'électrolyse (2) et une unité d'alimentation électrique (3).

Ladite cellule d'électrolyse (2) et ladite unité d'alimentation électrique (3) comportent des moyens de communication (4).

Ladite cellule d'électrolyse (2) comprend des moyens d'identification (25), incluant de préférence des données relatives aux caractéristiques nominales de ladite cellule d'électrolyse (2).

Et des moyens de commande (32) de l'unité d'alimentation électrique (3) sont conçus pour piloter automatiquement les paramètres électriques tenant compte desdits moyens d'identification (25).

## Description

### Domaine technique de l'invention

La présente invention concerne le domaine technique des électrolyseurs pour piscine.

### Etat de la technique

Les piscines sont des installations récréatives populaires et la qualité de leur eau est d'une importance capitale pour protéger la santé des nageurs.

Une méthode largement utilisée pour maintenir la qualité de l'eau consiste à ajouter des composés de chlore, qui désinfectent efficacement l'eau en éliminant les micro-organismes nocifs.

Pour la chloration de l'eau, les installations actuelles s'appuient sur différentes technologies, en particulier les électrolyseurs.

Le fonctionnement d'un électrolyseur consiste à faire circuler un courant électrique entre des plaques ou électrodes d'électrolyse (par exemple en platine ou en titane) équipant une cellule d'électrolyse, de manière à produire du chlore à partir du sel dissout dans l'eau.

Pour son alimentation électrique, cette cellule d'électrolyse est connectée à une unité d'alimentation électrique comprenant :
- des moyens d'alimentation électrique, adaptés à assurer l'alimentation électrique de cette cellule d'électrolyse selon des paramètres électriques, et
- des moyens de commande, adaptés à piloter ces moyens d'alimentation électrique de sorte à ajuster les paramètres électriques, par exemple la tension et/ou le courant en fonction d'une consigne de production de chlore.

Bien que cette technologie soit efficace et utilisée à grande échelle, elle présente plusieurs limites qui affectent son utilisation.

Les cellules d'électrolyse, soumises à une utilisation intensive, s'usent avec le temps et nécessitent un remplacement régulier. Lors de ce remplacement, des problèmes de compatibilité peuvent survenir, notamment lorsque la nouvelle cellule n'est pas correctement dimensionnée pour l'unité d'alimentation électrique, entraînant des risques de dysfonctionnement.

De plus, l'utilisation de cellules non certifiées ou non garanties par le constructeur peut compromettre la qualité et la fiabilité de l'équipement.

Par ailleurs, les électrolyseurs manquent souvent de flexibilité pour se connecter à d'autres capteurs, tels que des capteurs de température, de débit ou de gaz, afin d'assurer le fonctionnement dans de bonnes conditions et prolonger la durée de vie des cellules.

La chaîne de production des électrolyseurs est également confrontée à des défis logistiques importants. La gestion d'une large gamme de références de cellules et d'unités d'alimentation complique les opérations de fabrication et de maintenance.

Dans ce contexte, il devient nécessaire de proposer des solutions techniques innovantes pour surmonter ces obstacles.

### Présentation de l'invention

Afin de remédier à l'inconvénient précité de l'état de la technique, la présente invention propose un électrolyseur pour piscine, comprenant :
- une cellule d'électrolyse, adaptée à produire du chlore à partir de sel dissout dans l'eau de ladite piscine, et
- une unité d'alimentation électrique comprenant :
   -- des moyens d'alimentation électrique, adaptés à assurer l'alimentation électrique de ladite cellule d'électrolyse selon des paramètres électriques, et
   -- des moyens de commande, adaptés à piloter lesdits moyens d'alimentation électrique de sorte à ajuster lesdits paramètres électriques, par exemple la tension et/ou le courant en fonction d'une consigne de production de chlore.

Et, selon l'invention, ladite cellule d'électrolyse et ladite unité d'alimentation comportent des moyens de communication.

Ladite cellule d'électrolyse comprend des moyens d'identification, incluant de préférence des données relatives aux caractéristiques nominales de ladite cellule d'électrolyse, par exemple choisies parmi une valeur de courant maximal, une valeur de tension maximale, une capacité de production de chlore.

Et lesdits moyens de commande sont conçus pour piloter automatiquement lesdits paramètres électriques tenant compte desdits moyens d'identification.

De manière générale, selon l'invention, les moyens d'identification intégrés sur la cellule d'électrolyse sont automatiquement collectés et interprétés par l'unité d'alimentation électrique, qui s'ajuste en conséquence pour optimiser les paramètres électriques.

Ce processus confère un fonctionnement précis et adapté, tout en contribuant à prolonger la durée de vie de la cellule en évitant tout dépassement de ses limites opérationnelles.

La présente invention apporte ainsi une solution novatrice et efficace aux problématiques rencontrées avec les électrolyseurs traditionnels pour piscines.

Elle se distingue notamment par les avantages suivants :
- compatibilité et automatisation avancée :
   La cellule d'électrolyse est équipée de moyens d'identification, avantageusement capables de fournir des informations détaillées sur ses caractéristiques nominales (par exemple, courant maximal, tension maximale, capacité de production de chlore). Ces données permettent à l'unité d'alimentation électrique de s'autoconfigurer automatiquement en fonction des spécificités de la cellule. Cette automatisation garantit un fonctionnement optimal, réduit les erreurs d'installation et supprime le besoin d'un paramétrage manuel.
- optimisation de la durée de vie des cellules :
   Grâce à l'ajustement précis des paramètres électriques en fonction des caractéristiques spécifiques de la cellule, l'invention minimise les risques de surchauffe ou de surutilisation, prolongeant ainsi la durée de vie des cellules d'électrolyse. De plus, les moyens de commande peuvent ajuster les conditions de fonctionnement pour réduire l'usure des cellules arrivant en fin de vie.

De même, d'un point de vue sécurité de fonctionnement, l'invention permet de limiter les tensions et courants, afin de rester dans des plages de fonctionnement associées à la conception de la cellule (évitant ainsi surtension, trop forte intensité, etc.).
- facilité de remplacement et de compatibilité :
   Lorsqu'une cellule usée est remplacée, l'invention permet une reconfiguration automatique, même si les caractéristiques de la nouvelle cellule diffèrent de celles de l'ancienne. De plus, la reconnaissance des cellules garantit une compatibilité parfaite et un fonctionnement conforme aux spécifications du fabricant, assurant ainsi une fiabilité accrue.
- simplification de la chaîne de production :
   L'unification des unités d'alimentation électrique pour une utilisation avec une large gamme de cellules réduit considérablement le nombre de sous-ensembles nécessaires. Cette simplification allège les coûts de production, facilite la gestion des références produits, et améliore la logistique industrielle.
- connectivité étendue pour une performance optimisée :
   L'invention offre également une possibilité d'intégrer d'autres capteurs (par exemple, de température, de débit ou de gaz) pour un suivi plus précis et une optimisation du fonctionnement de l'électrolyseur. Cela permet une surveillance en temps réel et une gestion proactive des paramètres, améliorant ainsi l'efficacité globale de l'équipement.
- fiabilité accrue et réduction des erreurs humaines :
   La compatibilité automatique entre les cellules et les unités d'alimentation électrique élimine les risques liés aux erreurs de sélection ou de configuration des composants. Cette fiabilité renforce la sécurité d'utilisation et simplifie les opérations de maintenance. Cette fonctionnalité permet également une simplification lors du montage, ou du remplacement, d'une cellule (évite une configuration manuelle).

En d'autres termes, et de manière avantageuse, l'invention résout les problèmes de l'état de la technique en introduisant une architecture basée sur un dialogue automatisé entre la cellule d'électrolyse et l'unité d'alimentation électrique. Contrairement aux systèmes connus où l'unité d'alimentation pilote une cellule « passive » sur la base de paramètres externes (consignes de l'utilisateur, mesures de la qualité de l'eau) ou de modèles préprogrammés, l'invention dote la cellule d'électrolyse elle-même de moyens d'identification.

Ces moyens d'identification, de préférence stockée sur une carte électronique intégrée à la cellule, contiennent avantageusement les caractéristiques nominales de cette cellule spécifique : sa valeur de courant maximal admissible, sa valeur de tension maximale, sa capacité de production de chlore, etc.

Lors de l'installation ou du remplacement de la cellule, l'unité d'alimentation n'a plus besoin d'une configuration manuelle ou de se baser sur des hypothèses. Grâce aux moyens de communication, elle interroge la cellule, lit ses moyens d'identification et configure automatiquement ses propres paramètres de pilotage (tension, courant, fréquence) pour correspondre parfaitement aux spécifications de la cellule connectée.

Ce principe d'auto-configuration par identification de la cellule permet de garantir une compatibilité parfaite et un fonctionnement optimal.

D'autres caractéristiques non limitatives et avantageuses du produit conforme à l'invention, prises individuellement ou selon toutes les combinaisons techniquement possibles, sont les suivantes :
- ladite cellule d'électrolyse contient une carte électronique comportant des moyens mémoire destinés à stocker lesdites moyens d'identification (incluant de préférence des données relatives aux caractéristiques nominales de ladite cellule d'électrolyse) ; lesdits moyens mémoire contiennent également les données choisies parmi des données relatives à un historique d'utilisation, par exemple une durée d'utilisation versus une puissance de production, une durée de fonctionnement versus une température de l'eau, une fréquence ou un nombre d'inversion de polarité, et/ou une clé de chiffrement desdites données :
- ladite cellule d'électrolyse comprend des moyens capteurs choisis parmi des moyens capteurs de température, des moyens capteurs de gaz, des moyens capteurs de débit, lesquels moyens capteurs sont de préférence connectés à, ou portés par, une carte électronique contenue dans ladite cellule d'électrolyse ;
- la cellule d'électrolyse et l'unité d'alimentation électrique comprennent des moyens de transfert de puissance adaptés à l'alimentation électrique, et des moyens de communication adaptés à la communication filaire ;
- les moyens de commande comprennent un module de pilotage conçu pour l'ajustement des paramètres électriques, par exemple un programme d'ordinateur, qui est conçu pour mettre en œuvre le procédé suivant : une étape de collecte, au cours de laquelle les moyens d'identification (incluant de préférence des données relatives aux caractéristiques nominales de ladite cellule d'électrolyse) équipant ladite cellule d'électrolyse et, de préférence, les données générés par les moyens capteurs, sont transmis à ladite unité d'alimentation, de préférence une étape de vérification de compatibilité, au cours de laquelle les moyens de commande vérifient la compatibilité entre la cellule d'électrolyse et ladite unité d'alimentation, une étape d'ajustement automatique, au cours de laquelle lesdits moyens de commande pilotent automatiquement lesdits paramètres électriques tenant compte desdits moyens d'identification ; de préférence, le module de pilotage conçu pour l'ajustement des paramètres électriques est conçu pour mettre en œuvre le procédé comprenant encore une étape de mise à jour régulière des historiques d'utilisation, de préférence enregistrés dans des moyens mémoires ;
- les moyens de commande comprennent au moins un module choisi parmi un module de détection de fin de vie de la cellule, tenant compte de données parmi des durées d'historique de fonctionnement et des données de conditions réelles de fonctionnement (tension et courant mesurés) par rapport aux caractéristiques nominales de ladite cellule d'électrolyse, un module d'adaptation des conditions de fonctionnement de la cellule d'électrolyse en fin de vie, pour optimiser sa durabilité, notamment en limitant son usure.

La présente invention concerne encore un équipement technique pour une piscine, comportant un électrolyseur selon l'invention.

L'invention concerne également un procédé de fonctionnement d'un électrolyseur selon l'invention, qui comprend les étapes suivantes :
- une étape de collecte, au cours de laquelle les moyens d'identification équipant ladite cellule d'électrolyse et, de préférence, les données générés par les moyens capteurs, sont transmis à ladite unité d'alimentation,
- de préférence une étape de vérification de compatibilité, au cours de laquelle les moyens de commande vérifient la compatibilité entre la cellule d'électrolyse et l'unité d'alimentation électrique,
- une étape d'ajustement automatique, au cours de laquelle lesdits moyens de commande pilotent automatiquement lesdits paramètres électriques tenant compte desdits moyens d'identification et, de préférence, desdites données générées par les moyens capteurs ; et
- de préférence, une étape de mise à jour régulière des historiques d'utilisation, de préférence enregistrés dans les moyens mémoires.

L'invention concerne également une cellule d'électrolyse pour un électrolyseur selon l'invention, comprenant :
- des moyens de communication, adaptés à la communication avec une unité d'alimentation électrique, et
- des moyens d'identification, incluant de préférence des données relatives aux caractéristiques nominales de ladite cellule d'électrolyse, par exemple choisies parmi une valeur de courant maximal, une valeur de tension maximale ou une capacité de production de chlore.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue générale et schématique de l'équipement technique pour une piscine, comprenant l'électrolyseur selon l'invention ;
[Fig. 2] est une vue schématique et partielle de l'équipement technique selon la figure 1, illustrant son électrolyseur ;
[Fig. 3] est une vue isolée et en perspective d'une cellule d'électrolyse selon l'invention ;
[Fig. 4] est une vue schématique, et partiellement éclatée, de la cellule d'électrolyse selon l'invention ;
[Fig. 5] est une vue éclatée et partielle de la cellule d'électrolyse selon l'invention.

Il est à noter que, sur ces figures, les éléments structurels et/ou fonctionnels communs aux différentes variantes peuvent présenter les mêmes références.

La présente invention concerne ainsi un électrolyseur 1 pour piscine.

Par « électrolyseur pour piscine », on entend avantageusement un dispositif permettant de produire du chlore à partir du sel dissous dans l'eau d'une piscine.

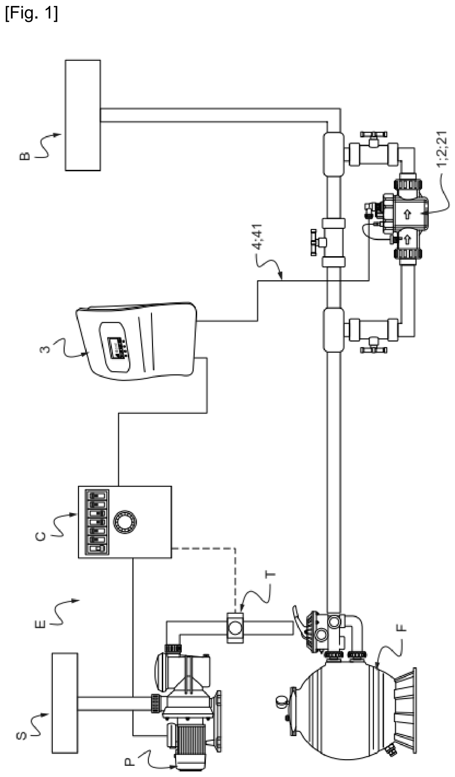

Cet électrolyseur 1 fait avantageusement partie de l'équipement technique E destiné à équiper une piscine, illustré schématiquement sur la figure 1.

Par « équipement technique E », on entend avantageusement un ensemble de dispositifs et de systèmes nécessaires au fonctionnement optimal d'une piscine.

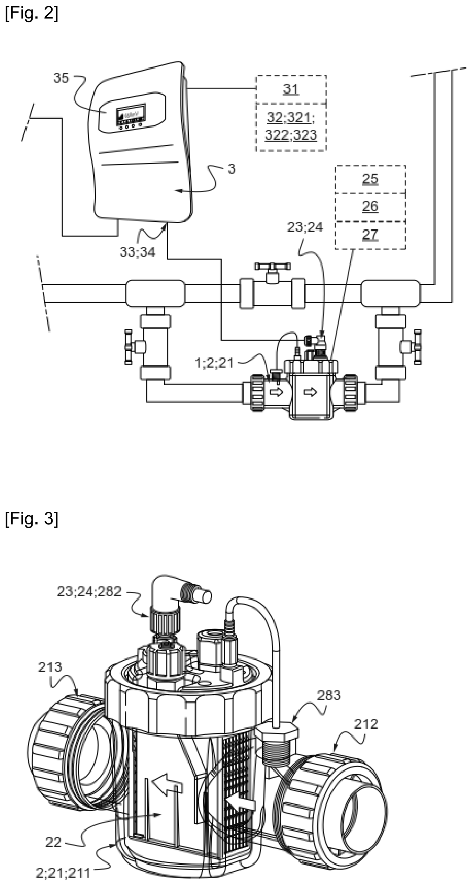

En particulier, tel qu'illustré schématiquement sur la figure 2, l'électrolyseur 1 comprend deux éléments :
- une cellule d'électrolyse 2, adaptée à produire du chlore à partir de sel dissout dans l'eau de la piscine, et
- une unité d'alimentation électrique 3, dite encore « boîtier de commande », qui assure le pilotage des paramètres électriques nécessaires au fonctionnement de la cellule d'électrolyse 2, en fonction notamment d'une consigne de production de chlore.

Selon l'invention, la cellule d'électrolyse 2 et l'unité d'alimentation électrique 3 comportent des moyens de communication 4, conçus pour assurer un échange de données entre ces deux composants.

Et la cellule d'électrolyse 2 comprend des moyens d'identification qui sont collectés par l'unité d'alimentation électrique 3 pour piloter automatiquement les paramètres électriques tenant compte de ces moyens d'identification.

### Moyens de communication

Par « moyens de communication 4 », on entend avantageusement un ensemble de dispositifs matériels et/ou logiciels permettant l'échange d'informations entre les composants de l'électrolyseur 1, en particulier entre la cellule d'électrolyse 2 et l'unité d'alimentation électrique 3.

Ces moyens de communication 4 peuvent permettre des échanges complémentaires avec, par exemple, des moyens capteurs, des systèmes externes ou des interfaces utilisateur.

Pour cela, la cellule d'électrolyse 2 et l'unité d'alimentation électrique 3 peuvent intégrer des modules de communication adaptés à traiter et à transmettre des données selon un protocole de communication.

Dans le cadre de la présente invention, les moyens de communication 4 peuvent être filaires ou non filaires (Bluetooth ou Wi-Fi par exemple).

Dans la configuration décrite ici, une solution filaire est mise en œuvre pour assurer à la fois l'alimentation électrique et la communication des données via un câble 41 combiné.

Dans cette configuration, un câble 41 unique est utilisé pour transmettre simultanément :
- l'alimentation électrique :
   Le câble fournit l'énergie nécessaire pour alimenter la cellule d'électrolyse 2, conformément aux paramètres électriques (tension et courant) déterminés par l'unité d'alimentation électrique 3.
- la communication des données :
   Le même câble 41 est utilisé pour échanger les informations entre la cellule et l'unité d'alimentation, tel que développé par la suite.

### Cellule d'électrolyse

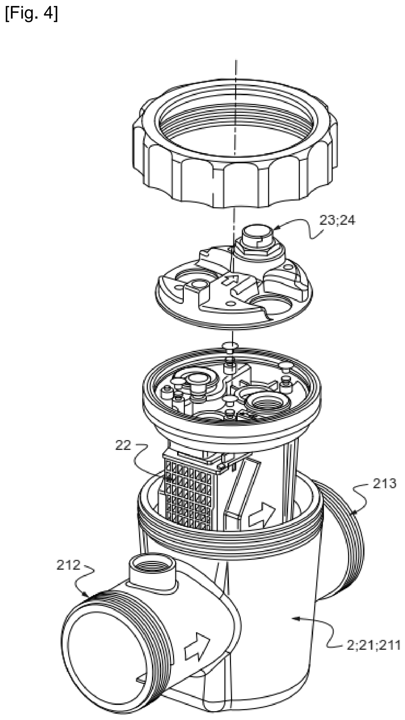

Tel que représenté schématiquement sur les figures 3 à 5, la cellule d'électrolyse 2 comprend :
- un support 21, appelé couramment « vase », classique en soi, comportant un logement 211 raccordé à une conduite d'entrée 212 et une conduite de sortie 213,
- une partie active 22, classique en soi, rapportée dans le logement 211, destiné à la production de chlore,
- des moyens connecteurs 23, 24, avantageusement sous la forme d'un connecteur unique, par exemple des moyens de transfert de puissance électriques 23 (permettant d'alimenter électriquement les plaques ou électrodes d'électrolyse) et, de préférence, des moyens de communication 24 adaptés à la communication filaire.

Selon l'invention, la cellule d'électrolyse 2 comprend également des moyens d'identification 25.

Par « moyens d'identification 25 », on entend avantageusement un ensemble de dispositifs (matériels et/ou logiciels) intégrés à la cellule d'électrolyse 2, permettant avantageusement de fournir des informations spécifiques sur les caractéristiques techniques et opérationnelles de cette cellule.

Ces moyens d'identification 25 sont conçus pour interagir avec l'unité d'alimentation électrique 3 afin d'assurer une compatibilité optimale et une gestion automatisée des paramètres de fonctionnement.

Ces moyens d'identification 25 incluent de préférence des données relatives aux caractéristiques nominales de la cellule d'électrolyse 2.

Ces données comprennent, par exemple, des données choisies parmi :
- la valeur de courant maximal supportée par la cellule d'électrolyse 2,
- la valeur de tension maximale applicable, et
- la capacité de production de chlore dans des conditions optimales de fonctionnement.

Tel que développé par la suite, ces informations assurent une configuration des paramètres électriques, garantissant ainsi un fonctionnement sécurisé et efficace de la cellule d'électrolyse 2.

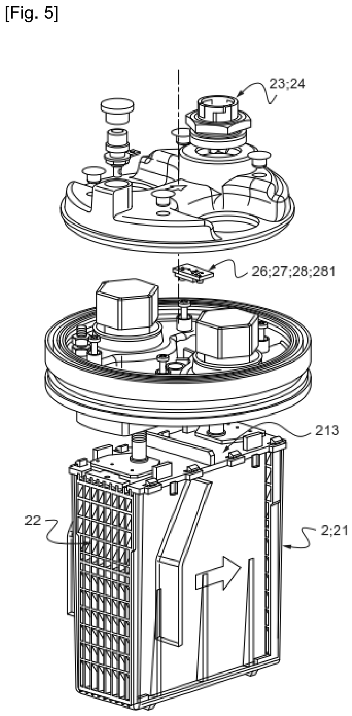

Plus précisément, tel que représenté sur la figure 5, la cellule d'électrolyse 2 contient avantageusement une carte électronique 26 comportant des moyens mémoire 27 destinés à stocker ces moyens d'identification 25.

Par « moyens mémoire », on entend avantageusement des dispositifs ou composants électroniques intégrés à la carte électronique 26 de la cellule d'électrolyse 2, destinés à stocker de manière sécurisée et durable les données relatives aux moyens d'identification 25 précités.

Les moyens mémoire 27 peuvent inclure une variété de technologies adaptées aux besoins de l'invention. Par exemple, une mémoire EEPROM ou une mémoire flash peut être utilisée pour stocker les données de manière non volatile, garantissant leur conservation même en l'absence d'alimentation électrique.

Les moyens mémoire 27 sont conçus pour être accessibles par l'unité d'alimentation électrique 3, avantageusement via des protocoles de communication adaptés. Cette accessibilité permet de lire ou de mettre à jour les données stockées.

De préférence, ces moyens mémoire 27 contiennent également les données choisies parmi des données relatives à un historique d'utilisation.

Un « historique d'utilisation » désigne avantageusement un enregistrement détaillé et structuré des données relatives au fonctionnement de la cellule d'électrolyse.

Cet historique permet de suivre l'évolution des conditions d'exploitation et de performance au fil du temps, offrant une vue d'ensemble sur l'utilisation passée de la cellule et ses interactions avec le système.

Les données relatives à un historique d'utilisation comprennent par exemple :
- une durée d'utilisation versus une puissance de production :
   Cette donnée représente le temps total pendant lequel la cellule d'électrolyse a fonctionné, en corrélation avec la puissance de chlore produite. Elle permet d'évaluer l'intensité d'utilisation de la cellule et d'analyser si elle est exploitée conformément à ses spécifications nominales.
- une durée de fonctionnement versus une température de l'eau :
   La température de l'eau a un impact significatif sur les performances et l'usure de la cellule d'électrolyse. Cette donnée permet de suivre le temps de fonctionnement de la cellule à différentes températures, identifiant ainsi les conditions opérationnelles optimales ou potentiellement dommageables.
- une fréquence ou un nombre d'inversions de polarité :
   Les inversions de polarité, utilisées pour limiter l'entartrage des plaques ou électrodes d'électrolyse, sont un indicateur clé de l'entretien automatique de la cellule. En suivant leur fréquence ou leur nombre total, il est possible d'évaluer l'efficacité du système d'auto-nettoyage et de détecter tout dysfonctionnement éventuel. Cette information peut également être utilisée pour évaluer la durée de vie de la cellule.

De préférence encore, ces moyens mémoire 27 contiennent des données choisies parmi une clé de chiffrement desdites données.

Par « clé de chiffrement desdites données », on entend avantageusement un mécanisme cryptographique intégré aux moyens mémoire 27 permettant de protéger les informations stockées contre tout accès non autorisé, modification ou falsification. Cette clé de chiffrement garantit la confidentialité et l'intégrité des données relatives à l'historique d'utilisation et aux caractéristiques de la cellule d'électrolyse.

Par ailleurs, selon encore une caractéristique de l'invention, la cellule d'électrolyse 2 comprend avantageusement des moyens capteurs 28 choisis parmi :
- des moyens capteurs 281 de température,
- des moyens capteurs 282 de gaz,
- des moyens capteurs 283 de débit.

Les moyens capteurs 28 sont avantageusement répartis au sein de la cellule d'électrolyse 2 et sont avantageusement connectés avec la carte électronique 26 (voire implantés sur cette dernière).

Par exemple :
- les moyens capteurs 281 de température sont avantageusement intégrés sur la carte électronique 26 ;
- les moyens capteurs 283 de débit sont avantageusement implantés dans la conduite d'entrée 212 du support 21 et sont connectés à la carte électronique 26 ;
- des moyens capteurs 282 de gaz équipent avantageusement les moyens connecteurs 23, 24 et sont connectés à la carte électronique 26.

Les moyens capteurs 28 de température mesurent la température de l'eau circulant dans la cellule d'électrolyse. Ils jouent un rôle dans le maintien des performances et de la sécurité du système en identifiant les variations de température qui pourraient affecter le fonctionnement de la cellule.

Les moyens capteurs 28 de gaz détectent la présence et la concentration des gaz produits lors du processus d'électrolyse, tels que l'hydrogène et le chlore. Ils contribuent à la sécurité et à la régulation du système en fournissant des informations sur la détection d'éventuelles accumulations dangereuses de gaz, permettant de déclencher des mesures de sécurité, comme l'arrêt automatique du système.

Les moyens capteurs 28 de débit mesurent le débit d'eau circulant dans la cellule.

De manière générale, ces moyens capteurs 28 sont de préférence connectés à, ou portés par, une carte électronique 26 contenue dans la cellule d'électrolyse 2.

### Unité d'alimentation électrique

Tel que représenté schématiquement sur la figure 2, l'unité d'alimentation électrique 3 comprend :
- des moyens d'alimentation électrique 31, adaptés à assurer l'alimentation électrique de la cellule d'électrolyse 2 selon des paramètres électriques, et
- des moyens de commande 32, adaptés à piloter les moyens d'alimentation électrique 31 de sorte à ajuster les paramètres électriques, par exemple la tension et/ou le courant en fonction d'une consigne de production de chlore, et
- de préférence, une interface 35 qui affiche les informations reçues de la cellule d'électrolyse 2, par exemple caractéristiques nominales, état des moyens capteurs 28, alertes de maintenance.

Les moyens d'alimentation électrique 31 consistent avantageusement en des dispositifs ou composants permettant de fournir l'énergie nécessaire au fonctionnement de la cellule d'électrolyse 2.

A titre d'exemple, les moyens d'alimentation électrique 31 peuvent inclure un transformateur électrique associé notamment à un régulateur de tension ou de courant.

Par « paramètres électriques », on entend avantageusement les grandeurs électriques qui régissent le fonctionnement de la cellule d'électrolyse, telles que la tension (exprimée en volts) et le courant (exprimé en ampères), ainsi que d'autres variables associées comme la fréquence, la puissance ou la résistance, utilisées pour optimiser la production de chlore en fonction des caractéristiques spécifiques de la cellule et des conditions de fonctionnement.

Les moyens de commande 32 consistent avantageusement en un ensemble de dispositifs matériels et/ou programmes d'ordinateurs conçus pour piloter les moyens d'alimentation électrique 31 et ajuster les paramètres électriques.

Ces moyens de commande 32 se présente avantageusement sous la forme d'un automate programmable industriel, à savoir un dispositif électronique numérique programmable qui envoie des ordres vers les moyens d'alimentation électrique 31 à partir de données d'entrées provenant de la cellule d'électrolyse 2, de consignes et d'un programme d'ordinateur.

Et, selon l'invention, les moyens de commande 32 sont conçus pour piloter automatiquement les paramètres électriques tenant compte des moyens d'identification 25 précités.

En d'autres termes, les moyens de commande 32 sont configurés pour ajuster automatiquement les paramètres électriques en s'appuyant sur les données fournies par les moyens d'identification 25 précités.

Cette conception permet une régulation précise et dynamique des paramètres électriques, afin de garantir un fonctionnement optimal de la cellule d'électrolyse 2, tout en respectant ses spécifications nominales et en évitant tout dépassement susceptible de réduire sa durabilité ou d'affecter ses performances.

Pour cela, les moyens de commande 32 comprennent avantageusement un module de pilotage 321, par exemple un programme d'ordinateur, conçu pour l'ajustement des paramètres électriques.

Ce module de pilotage 321 est conçu pour mettre en œuvre le procédé suivant :
- une étape de collecte, au cours de laquelle les moyens d'identification 25 équipant la cellule d'électrolyse 2 et, de préférence, les données générés par les moyens capteurs 28, sont transmis à l'unité d'alimentation électrique 3, et en particulier vers ce module de pilotage 321,
- de préférence une étape de vérification de compatibilité, au cours de laquelle les moyens de commande 32 vérifient la compatibilité entre la cellule d'électrolyse 2 et l'unité d'alimentation électrique 3,
- une étape d'ajustement automatique, au cours de laquelle les moyens de commande 32 pilotent automatiquement les paramètres électriques tenant compte des moyens d'identification 25 et, de préférence, les données générés par les moyens capteurs 28.

De préférence, le module de pilotage 321 est conçu pour mettre en œuvre le procédé comprenant encore une étape de mise à jour régulière des historiques d'utilisation, de préférence enregistrés dans les moyens mémoires 27.

Par ailleurs, les moyens de commande 32 comprennent avantageusement au moins un module choisi parmi :
- un module de détection 322 de fin de vie de la cellule, tenant compte de données parmi des durées d'historique de fonctionnement et des données de conditions réelles de fonctionnement (tension et courant mesurés) par rapport aux caractéristiques nominales de ladite cellule d'électrolyse 2,
- un module d'adaptation 323 des conditions de fonctionnement de la cellule d'électrolyse 2 en fin de vie, pour optimiser sa durabilité, notamment en limitant son usure.

Le module de détection 322 est conçu pour surveiller en continu l'état de la cellule d'électrolyse 2 et détecter les signes indiquant qu'elle approche de la fin de sa durée de vie. Pour ce faire, il analyse les données enregistrées dans les moyens mémoire 27, telles que la durée totale d'utilisation et les paramètres électriques réels mesurés, comme la tension et le courant appliqués.

En comparant ces données aux caractéristiques nominales de la cellule, le module identifie l'état de vie de la cellule.

Le module d'adaptation 323 est conçu pour ajuster automatiquement les paramètres opérationnels de la cellule d'électrolyse 2 lorsqu'elle atteint une phase de fin de vie. En analysant en temps réel les données, ce module adapte les conditions de fonctionnement, telles que la tension, le courant, ou la fréquence des inversions de polarité, afin de réduire l'usure et de prolonger la durabilité de la cellule.

Pour être complet, en lien avec le mode de réalisation illustré, l'unité d'alimentation électrique 3 comprend encore avantageusement une combinaison de moyens connecteurs :
- des moyens de transfert de puissance 33, adaptés à l'alimentation électrique de la cellule d'électrolyse 2, et
- des moyens de communication 34, adaptés à la communication filaire avec la cellule d'électrolyse 2.

Ces moyens connecteurs 33, 24 se présentent avantageusement sous la forme d'un connecteur unique. Ils peuvent également être séparés l'un de l'autre.

### Moyens connecteurs

Comme évoqué précédemment, la cellule d'électrolyse 2 et l'unité d'alimentation électrique 3 comprennent :
- des moyens de transfert de puissance 23, 33 adaptés à l'alimentation électrique, et
- des moyens de communication 24, 34 adaptés à la communication filaire.

En l'espèce, ces moyens connecteurs se présentent sous la forme d'un connecteur unique au niveau de la cellule d'électrolyse 2 et d'un connecteur unique au niveau de l'unité d'alimentation électrique 3.

La cellule d'électrolyse 2 et l'unité d'alimentation électrique 3 sont ainsi conçues pour intégrer des systèmes de connexion dédiés qui assurent à la fois l'alimentation électrique et la transmission des données.

Les moyens de transfert de puissance 23, 33 sont avantageusement conçus pour garantir une transmission de l'énergie électrique depuis l'unité d'alimentation électrique 3 vers la cellule d'électrolyse 2.

Les moyens de communication 24, 34 sont avantageusement destinés à assurer un échange de données entre la cellule d'électrolyse et l'unité d'alimentation électrique.

De préférence, ces moyens de communication 24, 34 sont utilisés pour transmettre :
- les informations issues des moyens d'identification 25 présents dans la cellule, permettant à l'unité d'alimentation électrique de s'adapter aux caractéristiques spécifiques de la cellule ;
- les données collectées par les moyens capteurs 28 ;
- les commandes ou mises à jour provenant de l'unité d'alimentation électrique.

### Equipement technique

Tel que représenté sur la figure 1, la présente invention concerne encore l'équipement technique E comportant l'électrolyseur 1 selon l'invention.

Cet équipement technique E comprend une combinaison de composants utiles au fonctionnement et à l'entretien de la piscine, par exemple :
- un coffret électrique C, qui assure l'alimentation de tous les composants électriques, en particulier de l'électrolyseur 1, tout en intégrant les dispositifs de sécurité ;
- des composants hydrauliques, par exemple une pompe P, un filtre F, un skimmer S, des buses de refoulement B ;
- un dispositif de mise à la terre T, installé entre la pompe P et le filtre F dans le circuit hydraulique ; ce dispositif est relié à la terre via le coffre électrique C.

En particulier, la cellule d'électrolyse 2 est conçue pour être intégrée directement dans le circuit hydraulique de la piscine. Elle assure la production de chlore à partir du sel dissous dans l'eau. Son montage est avantageusement réalisé de manière à garantir une circulation optimale de l'eau, une efficacité électrolytique maximale, et une maintenance aisée.

L'ensemble des composants, notamment l'électrolyseur 1, est avantageusement conçu pour fonctionner de manière coordonnée.

De préférence, les données issues des moyens capteurs 28 permettent d'ajuster en temps réel les paramètres de traitement de l'eau, tels que la production de chlore, le débit ou la température, tout en garantissant une efficacité maximale.

### Procédé de fonctionnement

La présente invention concerne encore un procédé visant à optimiser le fonctionnement de l'électrolyseur 1 en s'appuyant sur une série d'étapes automatisées qui assurent une configuration précise et un fonctionnement sécurisé de l'électrolyseur, avantageusement accompagné d'un suivi des performances.

Ce procédé selon l'invention comprend avantageusement les étapes suivantes :
- Etape de collecte :
   Au cours de cette étape, les moyens d'identification 25 équipant la cellule d'électrolyse 2 sont transmis à l'unité d'alimentation électrique 3.

En d'autres termes, l'unité d'alimentation électrique 3 lit automatiquement les caractéristiques nominales de la cellule d'électrolyse 2, correspondant aux moyens d'identification 25 intégrés. Ces caractéristiques sont transmises via les moyens de communication 4. Cette lecture va permettre à l'unité d'alimentation électrique 3 d'ajuster automatiquement ses réglages pour garantir un fonctionnement optimal et une compatibilité parfaite avec la cellule installée.

De préférence, ces données incluent les caractéristiques nominales de la cellule, telles que le courant maximal, la tension maximale et la capacité de production de chlore.

De préférence, les données générées par les moyens capteurs 28 sont également transmises à l'unité d'alimentation électrique 3.

La transmission s'effectue via les moyens de communication 4.

L'unité d'alimentation électrique 3 reçoit ainsi les informations nécessaires pour adapter ses réglages à la cellule installée.

Cette étape est particulièrement avantageuse lors du remplacement de la cellule d'électrolyse 2 en raison de son usure. Elle permet de détecter les caractéristiques spécifiques de la nouvelle cellule, même si celles-ci diffèrent de celles de l'ancienne.
- Etape de vérification de compatibilité (optionnelle) :
   Lors de cette étape, les moyens de commande 32 de l'unité d'alimentation électrique vérifient si la cellule d'électrolyse 2 est compatible avec les spécifications de l'équipement technique E.

Cette vérification repose sur la comparaison des données fournies par les moyens d'identification 25 avec les paramètres supportés par l'unité d'alimentation électrique 3.

En cas d'incompatibilité (par exemple, une cellule non certifiée ou sous-dimensionnée), l'unité d'alimentation électrique 3 peut signaler une erreur et empêcher le démarrage du système, évitant ainsi tout risque de dysfonctionnement.
- Etape d'ajustement automatique :
   Une fois la compatibilité confirmée, les moyens de commande 32 pilotent automatiquement les moyens d'alimentation électrique 31 pour ajuster les paramètres électriques de la cellule d'électrolyse 2.

De préférence, les paramètres électriques, tels que le courant et la tension, sont configurés en temps réel en fonction des caractéristiques nominales de la cellule et des conditions de fonctionnement.

En d'autres termes, selon l'invention, l'unité d'alimentation électrique 3 est configurée pour lire automatiquement les moyens d'identification 25. Sur la base de ces données, l'unité d'alimentation électrique 3 ajuste et configure automatiquement les paramètres électriques pour assurer une adaptation optimale aux spécifications de la cellule d'électrolyse 2, sans intervention manuelle.

L'ajustement peut également tenir compte des données issues des moyens capteurs 28 intégrés (par exemple, température ou débit) pour optimiser la production de chlore et préserver la durabilité de la cellule.

Cette automatisation permet d'éliminer les erreurs humaines, d'améliorer l'efficacité et de prolonger la durée de vie de la cellule.

Plus généralement, cette étape d'ajustement automatique consiste avantageusement en un mode de fonctionnement dans lequel l'unité d'alimentation électrique 3 et la cellule d'électrolyse 2 interagissent pour la production de chlore.

L'unité d'alimentation électrique 3 fournit une alimentation fixe ou préconfigurée à la cellule d'électrolyse 2, généralement déterminée selon des paramètres standards.

De manière classique en soi, la cellule d'électrolyse 2 produit avantageusement du chlore en fonction de la puissance électrique appliquée, des conditions de l'eau collectés notamment par les moyens capteurs 28 précités.

En particulier, lorsque la température de l'eau descend en dessous d'un seuil prédéfini, l'électrolyseur suspend automatiquement la production de chlore pour protéger la cellule d'électrolyse. Cette action préventive permet d'éviter l'usure prématurée des plaques ou électrodes d'électrolyse. Simultanément, une alarme est générée pour alerter l'utilisateur, soit par un affichage sur l'unité d'alimentation électrique, soit par une notification à distance, l'informant de la nécessité d'intervenir pour rétablir des conditions normales.

Si les moyens capteurs 28 détectent la présence continue de gaz (comme l'hydrogène) pendant plusieurs minutes, l'électrolyseur 1 interrompt la production de chlore. Une alarme est alors émise pour signaler ce problème à l'utilisateur.

En cas de détection d'un débit nul dans le circuit hydraulique, l'électrolyseur 1 coupe automatiquement l'alimentation de la cellule pour empêcher une dégradation des plaques ou électrodes d'électrolyse et pour empêcher une accumulation de gaz dans la cellule. Une alarme ou une information est remontée, informant l'utilisateur de l'anomalie.
- Etape de mise à jour régulière des historiques d'utilisation (optionnelle) :
   Pour un suivi précis et une gestion optimisée, les historiques d'utilisation de la cellule d'électrolyse 2 sont mis à jour régulièrement et enregistrés, de préférence dans les moyens mémoire 27 intégrés à la cellule d'électrolyse 2 et/ou dans un système externe.

Les données enregistrées peuvent inclure la durée d'utilisation, la puissance de production, la fréquence des inversions de polarité, et les conditions environnementales (température, débit).

Ces historiques permettent de conserver une traçabilité complète des performances et des conditions de fonctionnement de la cellule, jouant un rôle clé dans le support après-vente (SAV).

Le support SAV s'appuie avantageusement sur ces données pour fournir une assistance technique efficace et ciblée, en englobant par exemple les aspects suivants :
- Diagnostic en cas d'usure rapide de la cellule :
   En analysant les historiques d'utilisation, il est possible d'identifier rapidement les causes potentielles d'une usure accélérée, telles qu'une utilisation prolongée avec un débit insuffisant ou une température de l'eau trop faible. Ces diagnostics permettent de proposer des solutions correctives adaptées.
- Mesure du degré d'usure de la cellule :
   Les données collectées permettent de comparer les performances actuelles de la cellule à ses spécifications nominales, afin d'évaluer son état d'usure. Cette analyse préventive aide à anticiper les remplacements nécessaires avant que la cellule n'entraîne des dysfonctionnements.

Bien entendu, diverses autres modifications peuvent être apportées à l'invention dans le cadre des revendications annexées.

## Revendications

1. Electrolyseur pour piscine, comprenant :
- une cellule d'électrolyse (2), adaptée à produire du chlore à partir de sel dissout dans l'eau de ladite piscine, et
- une unité d'alimentation électrique (3) comprenant :
-- des moyens d'alimentation électrique (31), adaptés à assurer l'alimentation électrique de ladite cellule d'électrolyse (2) selon des paramètres électriques, et
-- des moyens de commande (32), adaptés à piloter lesdits moyens d'alimentation électrique (31) de sorte à ajuster lesdits paramètres électriques, par exemple la tension et/ou le courant en fonction d'une consigne de production de chlore,
**caractérisé en ce que** ladite cellule d'électrolyse (2) et ladite unité d'alimentation électrique (3) comportent des moyens de communication (4),
**en ce que** ladite cellule d'électrolyse (2) comprend des moyens d'identification (25),
et **en ce que** lesdits moyens de commande (32) sont conçus pour piloter automatiquement lesdits paramètres électriques tenant compte desdits moyens d'identification (25).

2. Electrolyseur, selon la revendication 1, **caractérisé en ce que** ladite cellule d'électrolyse (2) comprend des moyens d'identification (25), incluant des données relatives aux caractéristiques nominales de ladite cellule d'électrolyse (2).

3. Electrolyseur, selon la revendication 1, **caractérisé en ce que** les caractéristiques nominales de ladite cellule d'électrolyse (2) sont choisies parmi une valeur de courant maximal, une valeur de tension maximale, une capacité de production de chlore.

4. Electrolyseur, selon l'une quelconque des revendications 1 à 3, **caractérisé en ce que** ladite cellule d'électrolyse (2) contient une carte électronique (26) comportant des moyens mémoire (27) destinés à stocker lesdites moyens d'identification (25).

5. Electrolyseur selon la revendication 4, **caractérisé en ce que** lesdits moyens mémoire (27) contiennent également les données choisies parmi :
- des données relatives à un historique d'utilisation, par exemple une durée d'utilisation versus une puissance de production, une durée de fonctionnement versus une température de l'eau, une fréquence ou un nombre d'inversion de polarité, et/ou
- une clé de chiffrement desdites données.

6. Electrolyseur selon l'une quelconque des revendications précédentes, **caractérisé en ce que** ladite cellule d'électrolyse (2) comprend des moyens capteurs (28) choisis parmi :
- des moyens capteurs (28) de température,
- des moyens capteurs (28) de gaz,
- des moyens capteurs (28) de débit,
lesquels moyens capteurs (28) sont de préférence connectés à ou portés par une carte électronique (26) contenue dans ladite cellule d'électrolyse (2).

7. Electrolyseur selon l'une quelconque des revendications précédentes, **caractérisé en ce que** la cellule d'électrolyse (2) et l'unité d'alimentation électrique (3) comprennent :
- des moyens de transfert de puissance (23, 33) adaptés à l'alimentation électrique, et
- des moyens de communication (24, 34) adaptés à la communication filaire.

8. Electrolyseur selon l'une quelconque des revendications précédentes, **caractérisé en ce que** les moyens de commande (32) comprennent un module de pilotage (321) conçu pour l'ajustement des paramètres électriques, par exemple un programme d'ordinateur, qui est conçu pour mettre en œuvre le procédé suivant :
- une étape de collecte, au cours de laquelle les moyens d'identification (25) équipant ladite cellule d'électrolyse (2) et, de préférence, les données générés par les moyens capteurs (28), sont transmis à ladite unité d'alimentation électrique (3),
- de préférence une étape de vérification de compatibilité, au cours de laquelle les moyens de commande (32) vérifient la compatibilité entre la cellule d'électrolyse (2) et ladite unité d'alimentation électrique (3),
- une étape d'ajustement automatique, au cours de laquelle lesdits moyens de commande (32) pilotent automatiquement lesdits paramètres électriques tenant compte desdits moyens d'identification (25) et, de préférence, desdites données générées par les moyens capteurs (28).

9. Electrolyseur selon la revendication 8, **caractérisé en ce que** le module de pilotage (321) est conçu pour mettre en œuvre le procédé comprenant encore une étape de mise à jour régulière des historiques d'utilisation, de préférence enregistrés dans des moyens mémoires (27).

10. Electrolyseur selon l'une quelconque des revendications précédentes, **caractérisé en ce que** les moyens de commande (32) comprennent au moins un module choisi parmi :
- un module de détection (322) de fin de vie de la cellule, tenant compte de données parmi des durées d'historique de fonctionnement et des données de conditions réelles de fonctionnement (tension et courant mesurés) par rapport aux caractéristiques nominales de ladite cellule d'électrolyse (2),
- un module d'adaptation (323) des conditions de fonctionnement de la cellule d'électrolyse (2) en fin de vie, pour optimiser sa durabilité, notamment en limitant son usure.

11. Equipement technique pour une piscine, comportant un électrolyseur (1) selon l'une quelconque des revendications précédentes.

12. Procédé de fonctionnement d'un électrolyseur (1) selon l'une quelconque des revendications 1 à 10, **caractérisé en ce qu'**il comprend les étapes suivantes :
- une étape de collecte, au cours de laquelle les moyens d'identification (25) équipant ladite cellule d'électrolyse (2) et, de préférence, les données générés par les moyens capteurs (28), sont transmis à ladite unité d'alimentation électrique (3),
- de préférence une étape de vérification de compatibilité, au cours de laquelle les moyens de commande (32) vérifient la compatibilité entre la cellule d'électrolyse (2) et l'unité d'alimentation électrique (3),
- une étape d'ajustement automatique, au cours de laquelle lesdits moyens de commande (32) pilotent automatiquement lesdits paramètres électriques tenant compte desdits moyens d'identification (25) et, de préférence, desdites données générées par les moyens capteurs (28), et
- de préférence, une étape de mise à jour régulière des historiques d'utilisation, de préférence enregistrés dans les moyens mémoires (27).

13. Cellule d'électrolyse (2) pour un électrolyseur (1) selon l'une quelconque des revendications 1 à 10, comprenant :
- des moyens de communication (4), adaptés à la communication avec une unité d'alimentation électrique (3), et
- des moyens d'identification (25), incluant de préférence des données relatives aux caractéristiques nominales de ladite cellule d'électrolyse (2), par exemple choisies parmi une valeur de courant maximal, une valeur de tension maximale ou une capacité de production de chlore.
